# EUROPÄISCHE PATENTSCHRIFT

(11) **EP 3 147 060 B1**
(45) Veröffentlichungstag und Bekanntmachung des Hinweises auf die Patenterteilung: **02.10.2024**
(21) Anmeldenummer: 16183772.9
(22) Anmeldetag: 11.08.2016
(51) Int. Cl.: B23F 19/10, B23F 23/12

(54) **VERFAHREN ZUM ENTGRATEN EINES ZAHNRADROHLINGS UND VORRICHTUNG ZUR DURCHFÜHRUNG EINES DERARTIGEN VERFAHRENS**
METHOD OF DEBURRING A GEAR WHEEL BLANK AND DEVICE FOR CARRYING OUT SUCH A METHOD
PROCEDE D'EBAVURAGE D'UNE EBAUCHE D'ENGRENAGE ET DISPOSITIF POUR LA MISE EN OEUVRE D'UN TEL PROCÉDÉ

(30) Priorität: 28.09.2015 DE 102015012603
(43) Veröffentlichungstag der Anmeldung: 29.03.2017
(73) Patentinhaber: Liebherr-Verzahntechnik GmbH, 87437 Kempten (DE)
(72) Erfinder: Winkel, Oliver, 87437 Kempten (DE)
(74) Vertreter: Laufhütte, Dieter

(56) Entgegenhaltungen:
- EP-A2- 0 211 127
- EP-B1- 1 981 674
- EP-B1- 2 480 366
- DE-A1- 10 230 148
- DE-A1- 102005 034 882
- DE-C1- 10 109 117
- DE-U1- 202004 004 480
- US-B1- 8 175 742

## Beschreibung

Die Erfindung betrifft ein Verfahren zur Korrektur von Fasengrößen, Fasenformen und Fasensymmetrie an Zahnkanten, die mit einem Entgratfräser mit stark asymmetrischer Zahnform (ChamferCut) erzeugt wurden, sowie eine Vorrichtung zur Anwendung des Verfahrens. Ein derartiges Verfahren gemäß dem Oberbegriff des Anspruchs 1 ist aus dem Dokument EP 1 495 824 A bekannt.

Ein ChamferCut-Fräser ist ein Formfräser, der ein stark asymmetrisches Profil aufweist und der in einem kontinuierlichen Formfräsprozess Fasen an den Zahnkanten eines verzahnten Werkstückes erzeugt. Der Fräser ist weiterhin gekennzeichnet durch eine hohe Gangzahl. Im Gegensatz zu einem Wälzfräser arbeitet ein Chamfercut-Fräser kontinuierlich aber nicht wälzend.

Das bedeutet, dass jeder Zahn eines ChamferCut-Fräsers, der in eine neue Lücke trifft, die Fase entlang der Stirnseite der Verzahnung erzeugt. Dies erfolgt aber nicht - wie beim Wälzfräsen - in mehreren Hüllschnitten, sondern durch ein Sonderprofil dieses Werkzeugs, welches die gesamte Kontur der Fase (beide Flanken und den Zahngrund) in einem Schnitt erzeugt.

Die ChamferCut-Fräser sind damit stark werkstückgebunden. Auch Verzahnungen, die mit demselben Wälzfräser (bzw. dem gleichen Bezugsprofil) gefertigt werden, benötigen einen separaten ChamferCut-Fräser, wenn diese z.B. hinsichtlich Schrägungswinkel, Profilverschiebung oder Zähnezahl differieren.

Zu einem Werkzeugsatz zum Anfasen zylindrischer Stirnräder gehören typischerweise zwei gleiche ChamferCut-Werkzeuge, je eins für die Ober- und die Unterseite der Verzahnung. Möglich wäre aber auch die Verwendung von nur einem Fräser, wenn die Verzahnung nur einseitig entgratet werden soll, bzw. wenn eine Möglichkeit besteht den Fräser um 180° zu schwenken. Bei konischen Verzahnungen, die an der Ober- und Unterseite angefast werden sollen, sind zwei verschiedene Chamfercut Werkzeuge notwendig.

Die beiden ChamferCut-Fräser werden mit entgegengesetzter Orientierung auf den Dorn gespannt, so dass die obere und die untere Stirnfläche der Verzahnung bei entgegengesetzter Werkzeugdrehrichtung angefast werden. Es ist also zwischen beiden Bearbeitungsschritten ein Drehrichtungswechsel der Werkzeugspindel erforderlich.

Das allgemeine Verfahren zum Anfasen eines Zahnrades mit einem ChamferCut Fräser wird in der EP 1 495 824 A beschreiben. Beschreiben wir hier ein Verfahren zur Herstellung eines Zahnrades aus einem Zahnradrohling, bei dem der in einer Werkzeugmaschine eingespannte, drehend angetriebene Zahnradrohling mit einem auf einer drehend angetriebenen Werkzeugwelle angeordneten Wälzfräser bearbeitet und das erstellte Rohzahnrad anschließend mittels eines drehend angetriebenen Entgratwerkzeugs entgratet wird, indem die Stirnkanten der Zahnnuten angefast werden. Dabei weisen die Drehzahl von Entgratwerkzeug und Rohzahnrad ein konstantes Verhältnis auf, wobei das Entgraten am unverändert in der Werkzeugmaschine aufgespannten Rohzahnrad im kontinuierlichen Durchlauf miit Hilfe eines einem Scheibenfräser ähnlichen, Schneidzähne aufweisenden Entgratwerkzeugs erfolgt, das drehfest auf der Welle des Wälzfräsers angeordnet wird, wobei nach Art des Wälzfräsverfahrens nacheinander die Stirnkanten der Zahnnuten bearbeitet werden und wobei die Welle aus der Wälzfräseinstellung in eine Entgrateinstellung bewegt wird. Hier wird aber nur das Herstellverfahren für die Fasen mit dem speziellen ChamferCut Werkzeug allgemein beschrieben.

Da der ChamferCut-Fräser ein Einstellwerkzeug ist, muss mit Lageorientierung zwischen Werkstück und ChamferCut-Fräser gearbeitet werden. Das Werkzeug muss mit einem bestimmten Referenzzahn genau auf eine Lücke des Zahnrads eingemittet werden. Dieser Referenzzahn muss mit einem exakten Abstand zum Hauptlager des Bearbeitungskopfes positioniert sein und in einer bestimmten Drehposition mit einer der Stirnseiten der Verzahnung zusammentreffen.

Diese Besonderheit in der Einstellung des Werkzeugs und in der Fasenerzeugung eines ChamferCut Fräsers führt dazu, dass die meisten Parameter zur Beschreibung des Fräsers nur mathematisch berechnet, aber nicht am Fräser gemessen werden können. Die genauen Einstelldaten werden daher vom Werkzeughersteller in speziellen Einstelldatenblättern bereitgestellt. Damit lassen sich bei diesem Werkzeug die theoretisch korrekten Einstelldaten zur Erzeugung einer Auslegungskonformen Zahnfase in die Maschinensteuerung eingeben. Wenn nun aber die Fase nicht den geforderten Werten entspricht, müssen die Einstellwerte aus dem Datenblatt anhand von Messwerten der erzeugten Anfasung modifiziert werden.

Da es sich bei dem Werkzeug um einen Formfräser mit einem stark asymmetrischen Profil handelt, wird bisher in der Praxis anhand mehrerer Versuche ermittelt, mit welchen geänderten Einstelldaten eine korrekte Zahnfase erzeugt werden kann. Da eine Vielzahl der Achsen an der Fasenerzeugung beteiligt ist, stellt sich die korrekte Einstellung als manchmal sehr schwierig heraus.

Besonders schwierig ist es beim Anfasen und Entgraten von Schrägverzahnungen, dass sich Korrekturen an den Einstelldaten zwischen der spitzen und stumpfen Zahnkante unterschiedlich auswirken.

Der Erfindung liegt nun die Aufgabe zugrunde, ein Verfahren bereitzustellen, mit dem die Korrekturwerte zur Beeinflussung der Fasengröße, Fasenform und Fasensymmetrie anhand gemessener oder eingegebener Daten ermittelt und danach die Einstelldaten der Verzahnmaschine entsprechend korrigiert werden können. Mit diesen geänderten Einstelldaten soll dann bei der anschließenden Anfas- und Entgratbearbeitung eine korrekte Fasenform und eine passende Fasengröße und Fasensymmetrie erzeugt werden.

Die Lösung der Aufgabe ergibt sich aus der Merkmalskombination des Anspruchs 1.

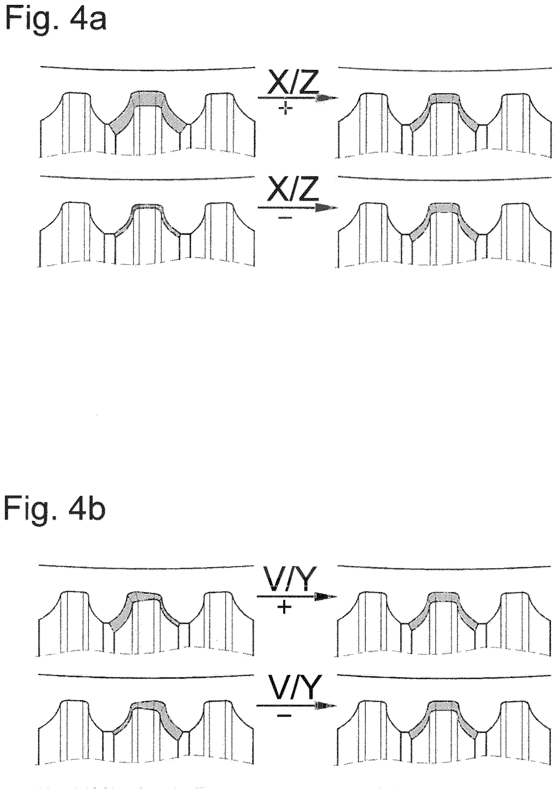

In einem ersten Aspekt der Erfindung wird eine halbautomatische Korrektur der Fasengeometrie bereitgestellt. Soll die Fasenbreite verändert werden, wird durch den Maschinenbediener die aktuellen Position des Werkzeuges in der vertikalen Richtung (Z1-Richtung) mit einem Korrekturbetrag korrigiert (siehe Fig. 4a). Diese reine vertikale Z1-Korrektur wirkt sich aber bei Schrägverzahnungen ungleichmäßig zwischen linker und rechter Zahnkante aus. Daher muss zusätzlich noch eine Korrektur der Drehposition des Werkstückes (C1-Richtung) erfolgen, deren Größe und Richtung vom Schrägungswinkel und der Zahnrichtung der Verzahnung abhängt sowie weiterhin noch davon, ob die Fase oben oder unten an der Verzahnung erzeugt werden soll.

Nach einer erfindungsgemäßen ersten Lösung gibt der Maschinenbediener die Korrektur in Z1 Richtung vor und die NC-Steuerung der Maschine errechnet mit den Werkzeug- und Verzahndaten die notwendige Zusatzkorrektur in C1-Richtung.

Soll die Fasengröße zwischen linker und rechter Zahnkante verändert werden, muss eine tangentiale Korrektur der Lage der Werkzeugschneide gegenüber der Zahnlücke erfolgen. Dazu gibt es je nach Ausführungsform der Einheit zwei Möglichkeiten.

Besitzt die Einheit eine V1-Achse, dann wird das ChamferCut-Werkzeug entlang seiner Mittelachse verschoben. Damit muss die Steuerung dann zusätzliche Korrekturen der Z1- und C1-Achsen vornehmen. Die Korrekturen in Richtung der Z1-Achse werden über den Schwenkwinkel des Werkzeugs beeinflusst, die der C1- Achse durch den Stirneingriffswinkel der Verzahnung.

Besitzt die Einheit hingegen eine Y1-Achse dann wird in diesem Fall die gesamte Einheit tangential zum Werkstück verschoben. Die zusätzliche Korrektur muss dann nur noch über die C1-Achse erfolgen, deren Größe wiederum durch den Stirneingriffswinkel der Verzahnung bestimmt wird. Die Berechnung erfolgt hierzu über trigonometrische Funktionen, die sich aus den Verzahnungsdaten und aus den Abmessungen der geforderten Fase ergeben.

Ein weiterer Aspekt der Erfindung ist eine vollautomatische Korrektur der Fasengeometrie nach dem Ergebnis einer extern vermessenen Fase oder nach dem Wert einer innerhalb der Maschine durchgeführten Fasenmessung. Die Korrekturmechanismen sind identisch zu den oben angegebenen Korrekturen, nur dass in diesem Fall die Steuerung zusätzlich noch entscheiden muss, mit welchen Achsbewegungen die Fase am besten korrigiert werden kann. Hierbei wird vorzugsweise die Fasenbreite eingegeben oder vermessen und ausgehend von diesem Messergebnis die Korrektur durchgeführt. Selbstverständlich bietet die Steuerung auch die Möglichkeit die Fasentiefe und/oder den Fasenwinkel einzugeben oder zu vermessen und daraus die Korrekturfaktoen für die Achsbewegungen zu ermitteln.

Mit den oben genutzten trigonometrischen Funktionen bietet die Steuerung die Möglichkeit aus der Fasenbreite auch die Fasentiefe und/oder den Fasenwinkel zu errechnen. Dies eröffnet dem Maschinenbediener die Möglichkeit, aus einfach zu messenden Werten (Fasenbreite) über die Maschinensteuerung daraus resultierende Werte zu erhalten, die dann mit Zeichnungsvorgaben verglichen werden können und die dann wiederum zur Korrekturvorgabe für die Fasen herangezogen werden können. Wenn beispielsweise in der Zeichnung nur die Fasentiefe vorgeben ist, kann daraus leicht die einfacher zu messende Fasenbreite ermittelt und als Kontrollwert ausgegeben werden.

Diese Ausgabefunktion kann in einer Erweiterung auch dazu genutzt werden, die Fasengröße für die Weichbearbeitung einer Verzahnung zu ermitteln. Die Fasen werden üblicherweise schon bei der Weichbearbeitung erzeugt und müssen aber nach der Hartfeinbearbeitung in einer bestimmten Größe vorliegen. Die Angaben zur Fasengröße sind nach dem Stand der Technik üblicherweise aber auf der Fertigteilzeichnung angegeben und liegen damit nicht für die Weichbearbeitung vor. Der Maschinebediener steht nun vor der Aufgabe, bei bekanntem Flankenaufmaß die korrekte Fasengröße am Werkstück zu ermitteln bzw. deren Einhaltung zu überprüfen.

Weitere Merkmale, Einzelheiten und Vorteile der Erfindung gehen aus der beigefügten Darstellung einer bevorzugten Ausführungsform hervor.

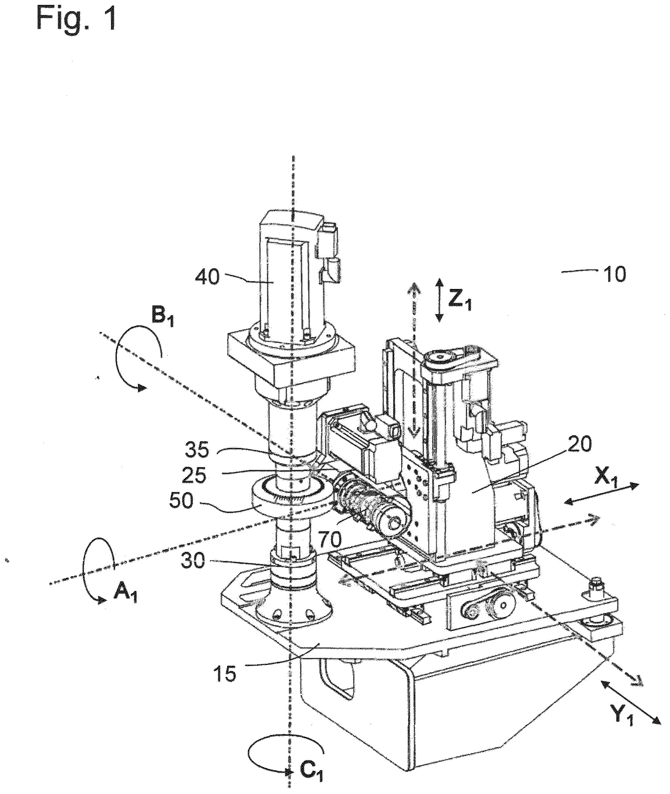

Fig. 1 zeigt eine bespielhafte Vorrichtung 10 zur Anwendung des erfindungsgemäßen Verfahrens. Das zu bearbeitende Werkstück 50 ist zwischen einer Werkstückauflage 30 und einer oberen Spannglocke 35 eingespannt. Angetrieben wird das Werkstück um die C1-Achse über einen Antrieb 40. Zu dieser C1-Achse dreht sich die Werkzeugachse B1 wälzgekoppelt und treibt dabei den Werkzeugdorn 70 an. Dieser Werkzeugdorn ist im Bearbeitungskopf 25 aufgenommen, der über die A1-Achse geschwenkt werden kann, um die Lage des Werkzeugs passend zum Schrägungswinkel der Verzahnung und zum Steigungswinkel des Werkzeugs einzustellen. Die Zustellbewegung des Werkszeugs erfolgt entlang der X1-Achse sowie der Z1- Achse mit der die Fräsposition unterhalb bzw. oberhalb der Verzahnung angefahren werden kann. Über die Y1-Achse können die Werkzeuge tangential zum Werkstück verfahren werden. Mit diesen Achsen erfolgen teilweise auch die notwendigen Korrekturbewegungen gemäß dieses Verfahrens, indem über die normale Positionierbewegung eine Bewegung in Höhe des Korrekturwertes überlagert wird.

In einer alternativen Ausführungsform kann das Werkzeug auch entlang seiner Werkzeugachse bewegt werden (V1-Richtung) anstatt einer Bewegung der gesamten Einheit tangential zum Werkstück (Y1-Richtung)

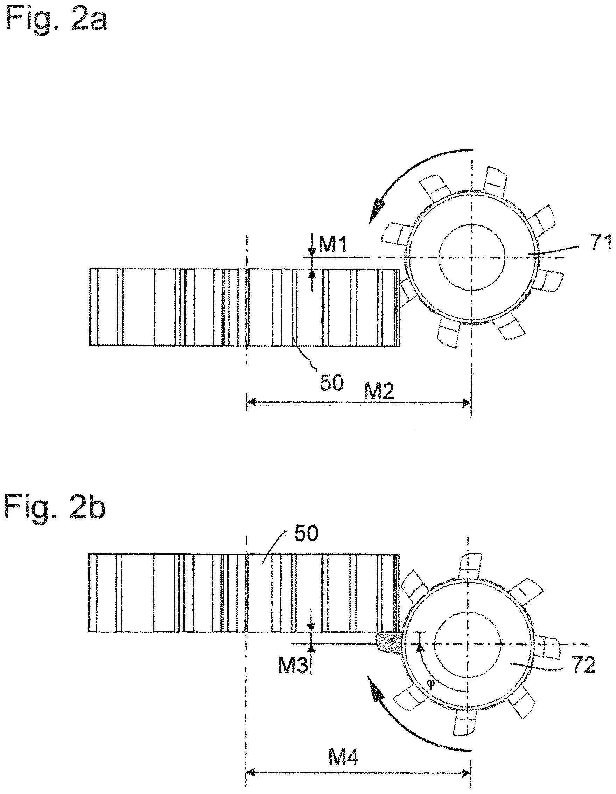

In der Fig.2 wird die Frässituation beim Anfasen und Entgraten der Zahnkanten gezeigt. Fig. 2 a zeigt dabei die Situation bei der Bearbeitung der oberen Zahnkante mit dem Fräserwerkzeug für die Verzahnungsoberkante 71. Dieses Werkzeug muss exakt mit den Einstellmaßen M1 und M2 positioniert werden, damit die gewünschte Kantenform und -größe an der Zahnkante erzeugt wird. In der Fig. 2b wird die Situation beim Anfasen und Entgraten der Zahnunterkante dargestellt. Das Maß M3 zeigt dabei den Abstand der Fräsermitte zur Stirnseite. Der Winkel ϕ beschreibt die Drehposition des Anfasfräsers 71, an der die Schneide des Referenzzahnes (grau hinterlegt) waagrecht auf die Stirnseite der Verzahnung trifft. Das Maß M4 ist der Referenzwert für den exakten Achsabstand zwischen der Werkzeug- und der Werkstückachse. Diese Daten finden sich auf dem Einstalldatenblatt für die Fräser wieder und entsprechen den mathematischen Auslegungsdaten für das Werkzeug. Die Einhaltung dieser Einstelldaten sollte zu einer auslegungsgerechten Anfasung führen. Bedingt durch Fertigungstoleranzen und Ungenauigkeiten bei der Positionierung des Werkszeugs, Nachschiffbeträgen beim Nachschärfen des Werkzeugs, etc. müssen diese Daten mittels Korrekturdaten modifiziert werden, um im Ergebnis eine korrekte Anfasung zu erhalten.

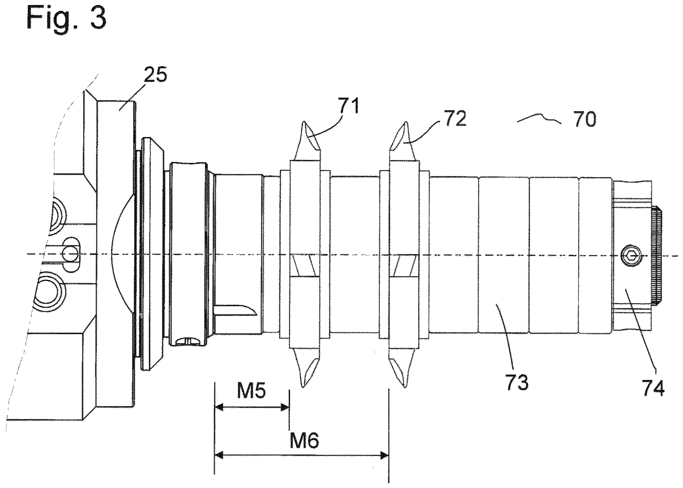

Die in der Fig. 3 gezeigte Werkzeugaufspannung 75 besteht aus einem Werkzeugdorn 74 zur Aufnahme der Werkzeuge 71,72 sowie mehreren Fräsdornringen 73, die zur Aufspannung der ChamferCut Werkzeuge dienen. Auch hier kommt es auf die möglichst exakte Einhaltung der Abstandsmaße M5, M6 an, die den Abstand zwischen dem Hauptlager und den Fräsern repräsentieren. Die Maße M5, M6 sind ebenfalls Daten, die aus dem Einstelldatenblatt des Fräserherstellers übernommen werden müssen.

Den Einfluss der einzelnen Achsbewegungen relativ zum Zahnrad bzw. die Anschauung, welche Korrektur zur welchem Ergebnis an der Zahnkante führt, zeigen die Figuren 4a bis 4d.

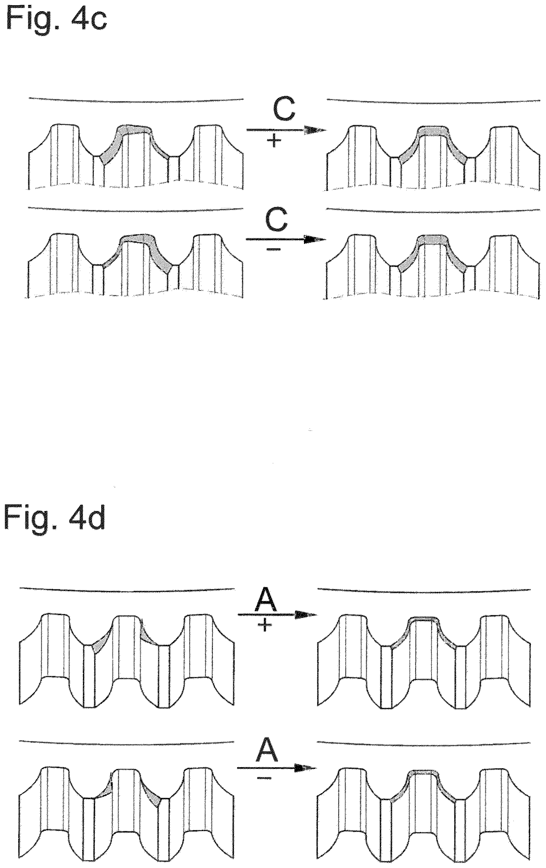

In der Figur 4 a wird der Einfluss der Werkzeugzustellung in Richtung auf das Werkstück entlang der der X1- bzw. Z1-Achse gezeigt. Ein positiver Korrekturwert an der X1-Achse führt zu einem größeren Achsabstand zwischen der Werkzeug- und der Werkstückachse, wodurch sich die Fasengröße reduziert. Um umkehrten Fall wird die Fase größer. Bei der Z1-Achse führt ein positiver Korrekturwert zu einer schmaleren Fase, ein negativer Wert bringt den Fräser näher ans Werkstück heran und vergrößert damit die Fase.

Eine tangentiale Verschiebung des Werkzeuges zum Werkstück in Richtung der Y1-Achse führt zu unterschiedlich großen Fasen zwischen der linken und rechten Zahnflanke. Ist die Fase auf der linke Zahnflanke zu groß, muss in "plus Richtung" der Y1-Achse geändert werden. Eine Korrektur von der rechten Zahnflanke weg geht über eine "minus Korrektur". Der Effekt ist in der Fig. 4b dargestellt. Dieser Effekt lässt sich ebenfalls durch eine Zusatzdrehung um die C1 Achse erzielen, wie dies in der Fig. 4c zu erkennen ist.

Schwankt die Fasenbreite vom Zahnkopf zu Zahnfuss hin, muss mit einem zusätzlichen Verschwenken um die A1 Achse reagiert werden. Die Wirkung dieses Effektes auf die Zahnflanke sowie die die Richtung in der korrigiert werden muss, ist anhand der Darstellung in der Fig. 4d gut veranschaulicht.

Mit Hilfe dieser Figuren kann die Richtung, in die korrigiert werden muss, recht einfach dargestellt werden. Damit steht aber nur die Richtung fest, nicht jedoch der Betrag. Vor allem bei Schrägverzahnungen müssen, bedingt durch die Verzahnungsgeometrie, mehrere Achsen gleichzeitig korrigiert werden, da sich die Korrekturergebnisse zwischen rechter und linker Zahnflanke unterscheiden.

In diesem Fall unterstützt das erfindungsgemäße Verfahren, in dem der Maschinenbediener nur die gemessenen Werte für die Fasenform für die beiden Zahnflanken eingeben muss und die Maschinensteuerung daraus dann anschließend die notwendigen Korrekturen auch für mehrere Achsen gleichzeitig ermittelt und bei der Bearbeitung des nächsten Werkstück gleich mit berücksichtigt.

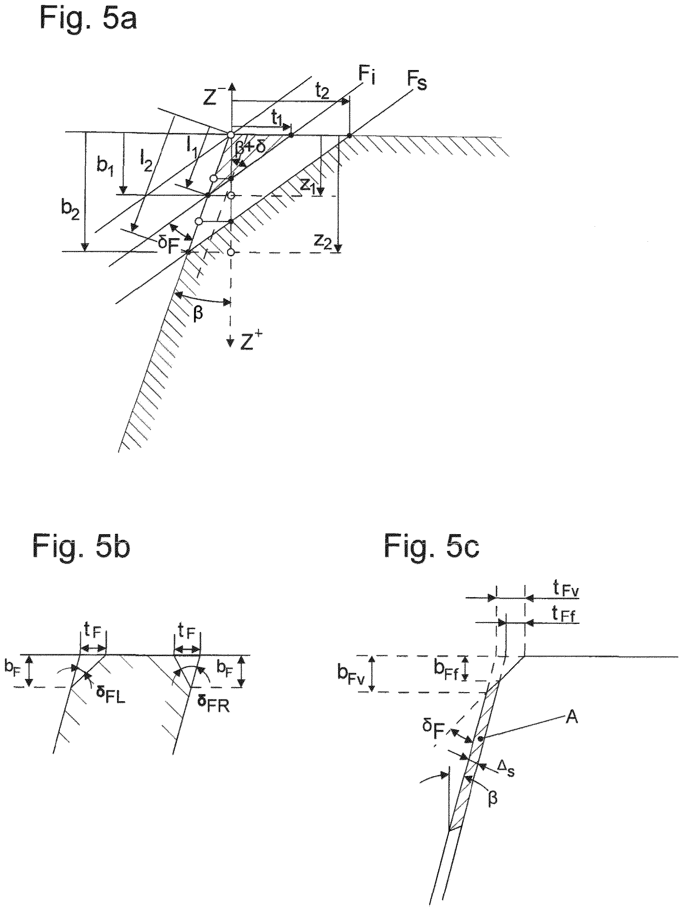

Die Figuren 5a bis 5c zeigen jeweils die Kante einer Zahnflanke mit verschiedenen Parametern zur Beschreibung der Fase.

Verwendete Parameter in den Figuren 5a bis 5c:
- αₜ: Stirneingriffswinkel der Verzahnung
- αₙ: Normaleingriffswinkel der Verzahnung
- β: Schrägungswinkel der Verzahnung
- η: Schwenkwinkel des ChamferCuts
- bF: Fasenbreite
- tF: Fasentiefe
- ρF: Fasenwinkel (const.)
- ρ_{R,L}: Fasenwinkel (const.)
- Δ_{S}: Flankenaufmaß
- C: Verhältnis der Fasentiefen zur Fasenbreite
- C_{Z R,L}: Verhältnis der Fasenbreite zur axialen Verschiebung
- Z_{R,L}: axiale Verschiebung der Fase
- K: Kantenwinkel-Faktor
- Fₛ: Sollfase
- Fᵢ: Istfase
- Index v: vorverzahnt
- Index f: fertig verzahnt
- Index R: rechte Flanke
- Index L: Linke Flanke

Fig. 5b zeigt den Zusammenhang zwischen Fasenbreite, Fasengröße und Fasenwinkel sowohl für die spitze als auch für die stumpfe Fase. Gut erkennbar daran ist, dass bei gleichen Werten für die Fasenbreite und Fasentiefe ein anderer Fasenwinkel erzeugt wird, da der Schrägungs-winkel der Verzahnung mit berücksichtigt werden muss.

Fig. 5c zeigt den Einfluss des Bearbeitungsaufmaßes Δ_{S} auf die Fasengrößen bF bzw tF.

## Patentansprüche

1. Verfahren zur Korrektur von Fasengrößen, Fasenformen und Fasensymmetrie an Zahnkanten, die mit einem Entgratfräser (70) mit stark asymmetrischer Zahnform (ChamferCut) zum Entgraten eines Zahnradrohlings (50) erzeugt wurden, **dadurch gekennzeichnet dass** eine halbautomatische Korrektur der Fasen, d.h. der Fasenbreite und Fasenform, durch Kopplung der Bewegung mehrerer Achsen einer Verzahnmaschine erfolgt, die zumindest als eine C₁-Achse eine Werkstückdrehachse, als Z₁-, X₁- und Y₁-Achse die räumlichen Verschiebeachsen eines Werkzeugschlittens und als V₁-Richtung die Verschieberichtung in Achsrichtung der Werkzeugachse aufweist, mit folgenden Schritten:
- Vorgabe der Korrektur in einer Achsrichtung,
- Berechnung des dazu notwendigen Korrekturbetrags weiterer Achsen durch die Steuerung über trigonometrische Funktionen bei
- Kopplung der C₁-Achse an die Z₁- Achse über den Schrägungswinkel (β) der Verzahnung für den Fall der Vorgabe der Korrektur in Z₁-Richtung, sodass eine Korrektur der Drehposition (C1) des Werkstückes erfolgt und
- Kopplung der C₁ - Achse über den Stirneingriffswinkel (αt) der Verzahnung und Z₁ - Achse über den Schwenkwinkel (η) des Werkzeugs (70) an die V₁ - Richtung für den Fall der Vorgabe der Korrektur in V₁-Richtung , sodass Korrekturen der C₁- und Z₁-Achsen erfolgen und
- Kopplung der Y₁ -Achse an die C₁ - Achse über den Stirneingriffswinkel (αt) der Verzahnung für den Fall der Vorgabe der Korrektur in Y₁-Richtung, sodass eine Korrektur über die C₁-Achse erfolgt.

2. Verfahren nach Anspruch 1, **dadurch gekennzeichnet, dass** die Fasenbreite für die linke und/oder die rechte Flanke über die Eingabe der gemessenen Fasenbreite im Vergleich mit den eingegebenen Sollwerten automatisch korrigiert wird.

3. Verfahren nach Anspruch 1, **dadurch gekennzeichnet, dass** die Fasenbreite für die linke und/oder die rechte Flanke nach einem Messergebnis, welches mittels einer Messeinrichtung (Messtaster) in der Verzahnmaschine ermittelt wurde, im Vergleich mit den eingegebenen Sollwerten automatisch korrigiert wird.

4. Verfahren nach einem der vorangehenden Ansprüche, **dadurch gekennzeichnet, dass** Fräserdaten über ein elektronisches Datenformat (beispielsweise XML) übernommen werden.

5. Verfahren nach einem der vorangehenden Ansprüche, **dadurch gekennzeichnet, dass** Fräserdaten online bei der Wiederaufbereitung des stumpfen Werkzeugs abgerufen werden.

6. Verfahren nach einem der vorangehenden Ansprüche, **dadurch gekennzeichnet, dass** die Fasenbreite von vorverzahnten Werkzeugen unter Berücksichtigung des Bearbeitungsaufmaßes auf der Zahnflanke auf fertigverzahnte Werkzeuge umgerechnet wird.

7. Verfahren nach einem der vorangehenden Ansprüche, **dadurch gekennzeichnet, dass** gemessene Werte mit Zeichnungswerten verglichen werden, auch wenn diese nicht im gemessenen Format vorliegen.

8. Vorrichtung (10) zur Durchführung eines Verfahrens nach einem der vorgenannten Ansprüche mit einer Steuerung zur automatischen Durchführung der folgenden Schritte nach Vorgabe einer Korrektur in einer Achsrichtung:
- Berechnung des dazu notwendigen Korrekturbetrags weiterer Achsen durch die Steuerung bei
- Kopplung der C₁-Achse an die Z₁-Achse über den Schrägungswinkel (β) der Verzahnung für den Fall der Vorgabe einer Korrektur in Z₁-Richtung, sodass eine Korrektur der Drehposition (C₁) des Werkstückes (50) erfolgt und
- Kopplung der C₁-Achse über den Stirneingriffswinkel (αt) der Verzahnung und der Z₁-Achse über den Schwenkwinkel (η) des Werkzeugs an die V₁-Richtung für den Fall der Vorgabe einer Korrektur in V₁-Richtung, sodass Korrekturen der C₁- und Z₁-Achsen erfolgen und
- Kopplung der Y₁-Achse an die C₁-Achse über den Stirneingriffswinkel (αt) der Verzahnung für den Fall der Vorgabe einer Korrektur in Y₁-Richtung, sodass eine Korrektur über die C₁-Achse erfolgt.

## Claims

1. Method for the correction of chamfer sizes, chamfer shapes and chamfer symmetry at tooth edges which were produced with a deburring cutter with strongly asymmetric tooth shape (ChamferCut) for deburring a tooth blank (50), **characterized in that** a semi-automatic correction of the chamfers, i.e. the chamfer width and chamfer shape, is effected by coupling the movement of several axes of a gear cutting machine which at least comprises a workpiece axis of rotation as a C₁-axis, the spatial shifting axes of a tool carriage as Z₁-, X₁- and Y₁-axis, and the shifting direction in the axial direction of the tool axis as a V₁-direction, comprising the following steps:
- specifying the correction in an axial direction,
- calculating the necessary correction amount of further axes by the controller with
- coupling of the C₁-axis to the Z₁-axis via the helix angle (β) of the toothing and/or if the correction in the Z₁-direction is specified so that a correction of the rotary position (C₁) of the workpiece is effected,
- coupling of the C₁-axis via the front contact angle (αt) of the toothing and of the Z₁-axis via the swivel angle (η) of the tool (70) to the V₁-direction if the correction in the V1-direction is specified, so that corrections of the C₁- and Z₁-axes are performed, and
- coupling of the Y₁-axis to the C₁-axis via the front contact angle (αt) of the toothing if the correction of the Y₁-direction is specified, so that a correction is effected via the C₁-axis.

2. Method according to claim 1, **characterized in that** the chamfer width for the left and/or the right flank is corrected automatically by entering the measured chamfer width in comparison with the entered setpoint values.

3. Method according to claim 1, **characterized in that** the chamfer width for the left and/or the right flank is corrected automatically according to a measurement result which was determined by means of a measuring means (measuring sensor) in the gear cutting machine, in comparison with the entered setpoint values.

4. Method according to any one of the preceding claims, **characterized in that** milling cutter data are taken over via an electronic data format (for example XML).

5. Method according to any one of the preceding claims, **characterized in that** milling cutter data are retrieved online when reconditioning the blunt tool.

6. Method according to any one of the preceding claims, **characterized in that** the chamfer width of pre-toothed tools is converted to completely toothed tools by taking account of the machining allowance on the tooth flank.

7. Method according to any one of the preceding claims, **characterized in that** measured values are compared with drawing values, even if the same are not present in the measured format.

8. Apparatus for carrying out a method according to any one of the aforementioned claims with a controller for automatically carrying out the following steps after specification of a correction in the axis direction:
- calculating the necessary correction amount of further axes by the controller with
- coupling of the C₁-axis to the Z₁-axis via the helix angle (β) of the toothing and/or if the correction in the Z₁-direction is specified so that a correction of the rotary position (C₁) of the workpiece is effected,
- coupling of the C₁-axis via the front contact angle (αt) of the toothing and of the Z₁-axis via the swivel angle (η) of the tool to the V₁-direction if the correction in the V1-direction is specified, so that corrections of the C₁- and Z₁-axes are performed, and
- coupling of the Y₁-axis to the C₁-axis via the front contact angle (αt) of the toothing if the correction of the Y₁-direction is specified, so that a correction is effected via the C₁-axis.

## Revendications

1. Procédé de correction de tailles de chanfrein, de formes de chanfrein et de symétrie de chanfrein sur des arêtes de dent qui ont été produites avec une fraise d'ébavurage (70) avec une forme de dent fortement asymétrique (ChamferCut) pour l'ébavurage d'une ébauche de roue dentée (50), **caractérisé en ce qu'**une correction semi-automatique des chanfreins, c'est-à-dire de la largeur de chanfrein et de la forme de chanfrein, a lieu par couplage du mouvement de plusieurs axes d'une machine à tailler les engrenages, qui présente au moins comme axe C₁ un axe de rotation de la pièce, comme axes Z₁, X₁ et Y₁ les axes de déplacement dans l'espace d'un chariot d'outil et comme direction V₁ la direction de déplacement dans la direction axiale de l'axe d'outil, avec les étapes suivantes :
- la prescription de la correction dans une direction axiale,
- le calcul du montant de la correction nécessaire à cet effet pour d'autres axes par la commande par l'intermédiaire de fonctions trigonométriques lors
- du couplage de l'axe C₁ à l'axe Z₁ par l'intermédiaire de l'angle d'inclinaison (β) de la denture dans le cas de la prescription de la correction dans la direction Z₁ de telle sorte qu'une correction de la position de rotation (C1) de la pièce a lieu et
- du couplage de l'axe C₁ par l'intermédiaire de l'angle d'engrènement frontal (αt) de la denture et de l'axe Z₁ par l'intermédiaire de l'angle de pivotement (η) de l'outil (70) à la direction V₁ dans le cas de la prescription de la correction dans la direction Y₁, de telle sorte que des corrections des axes C₁ et Z₁ ont lieu, et
- du couplage de l'axe Y₁ à l'axe C₁ par l'intermédiaire de l'angle d'engrènement frontal (αt) de la denture dans le cas de la prescription de la correction dans la direction Y₁, de telle sorte qu'une correction a lieu par l'intermédiaire de l'axe C₁.

2. Procédé selon la revendication 1, **caractérisé en ce que** la largeur de chanfrein pour le flanc gauche et/ou le flanc droit est corrigée automatiquement par l'intermédiaire de l'entrée de la largeur de chanfrein mesurée en comparaison avec les valeurs de consigne entrées.

3. Procédé selon la revendication 1, **caractérisé en ce que** la largeur de chanfrein pour le flanc gauche et/ou le flanc droit est corrigée automatiquement en comparaison avec les valeurs de consigne entrées, en fonction d'un résultat de mesure qui a été déterminé au moyen d'un dispositif de mesure (palpeur de mesure) dans la machine à tailler les engrenages.

4. Procédé selon l'une quelconque des revendications précédentes, **caractérisé en ce que** les données de la fraise sont transférées par l'intermédiaire d'un format de données électronique (par exemple XML).

5. Procédé selon l'une quelconque des revendications précédentes, **caractérisé en ce que** les données de la fraise sont récupérées en ligne lors du reconditionnement de l'outil émoussé.

6. Procédé selon l'une quelconque des revendications précédentes, **caractérisé en ce que** la largeur de chanfrein d'outils pré-dentés est convertie en outils à denture finie en tenant compte de la surépaisseur d'usinage sur le flanc de la dent.

7. Procédé selon l'une quelconque des revendications précédentes, **caractérisé en ce que** les valeurs mesurées sont comparées aux valeurs du dessin, même si celles-ci ne sont pas disponibles dans le format mesuré.

8. Dispositif (10) pour la mise en oeuvre d'un procédé selon l'une quelconque des revendications précédentes, avec une commande pour l'exécution automatique des étapes suivantes après prescription d'une correction dans une direction axiale :
- le calcul du montant de la correction nécessaire à cet effet pour d'autres axes par la commande lors
- du couplage de l'axe C₁ à l'axe Z₁ par l'intermédiaire de l'angle d'inclination (β) de la denture dans le cas de la prescription d'une correction dans la direction Z₁, de telle sorte qu'une correction de la position de rotation (C₁) de la pièce (50) a lieu et
- du couplage de l'axe C₁ par l'intermédiaire de l'angle d'engrènement frontal (αt) de la denture et de l'axe Z₁ par l'intermédiaire de l'angle de pivotement (η) de l'outil à la direction V₁ dans le cas de la prescription d'une correction dans la direction V₁, de telle sorte que des corrections des axes C₁ et Z₁ ont lieu et
- du couplage de l'axe Y₁ à l'axe C₁ par l'intermédiaire de l'angle d'engrènement frontal (αt) de la denture dans le cas de la prescription d'une correction dans la direction Y₁, de telle sorte qu'une correction a lieu par l'intermédiaire de l'axe C₁.
